# EUROPEAN PATENT APPLICATION

(11) **EP 4 775 337 A1**
(43) Date of publication of application: **15.07.2026**
(21) Application number: 25150944.4
(22) Date of filing: 09.01.2025
(51) Int. Cl.: B23B 51/00

(54) **DRILL TIP SCREW**

(71) Applicant: AB Sandvik Coromant, 811 81 Sandviken (SE)
(72) Inventor: ENGSTRÖM, Tord, SE-811 81 Sandviken (SE)
(74) Representative: Sandvik

(57) **Abstract**

A drill tip screw (3) for fastening of a drill tip (2) to an exchangeable head drill support body (1) has a general extension in an axial direction (10). The drill tip screw comprises a screw head (12) at a first axial end (11) of the drill tip screw and an outer threading (18) at a second axial end (19) of the drill tip screw. The second axial end is opposite to the first axial end. The drill tip screw further comprises a center portion (15), wherein the center portion is rotationally symmetric. The drill tip screw further comprises a first tapered portion (14) having its widest end (21) connected in one piece to the center portion. The first tapered portion is rotationally symmetric. An axial cross-section of the first tapered portion presents a concave surface shape.

## Description

### TECHNICAL FIELD

The present invention relates in general to a cutting tool and in particular to a drill tip screw for fastening a drill tip to an exchangeable head drill support body.

### BACKGROUND

When performing a cutting process, a cutting edge is moved in contact relative to a workpiece to be processed. The cutting edge typically removes some material from the workpiece. It is advantageous to have a cutting edge that has high abrasive resistance. The cutting edges are therefore normally manufactured from hard materials, which typically are expensive and often difficult to form. When the cutting edge is worn out, it is typically discarded.

In order to reduce the amount of expensive materials, it is commonly used to have a small cutting insert removably held by a support body. When the cutting edge is worn out, the cutting insert can simply be exchanged for a new one, thereby reusing the support body. This type of tools is often referred to as an exchangeable head drill tool solution. The exchangeable head drills can be made in several different styles. One common style includes a drill tip screw that locks the cutting insert, i.e. the exchangeable head, in between two upstanding towers. The drill tip screw passes through a hole in the exchangeable head. One of the towers has a recess for the screwhead and the other tower has a threaded hole. The screw joint presses the towers against the exchangeable head for fixating the positions.

By arranging the drill tip screw to exert a force on the lower inner part of the hole through the drill tip, the drill tip screw is pre-stressed to secure the drill tip in several directions. One example of such a cutting tool is disclosed in the published US patent application US 2022/0339710 A1, where an offset distance between a threaded hole in one tower (or finger) and a symmetry axis of a hole in the opposite tower causes the drill tip screw to be in contact with a lower part of the exchangeable head and exerts a force thereon.

In order to provide a rigid fastening of the drill tip, the towers of the support body as well as the drill tip itself, are preferably made as rigid as possible. This means that the amount of material removed from these parts for providing the holes in the towers and the drill tip should be kept low. Small, narrow drill tip screws are therefore typically used for the clamping action. Since the drill tip screws also during operation of the tool is exposed for large forces, it is not uncommon that the drill tip screws are broken. Exchange of drill tip screws may, in addition to the costs for a new drill tip screw, cause long periods of inactivity in the processes that the tool is intended to participate, which typically give rise to considerable economic losses.

It is thus requested to find improved solutions of fastening a drill tip at an exchangeable head drill support body.

### SUMMARY

A general object of the present technology is thus to improve the durability of a drill tip fastened at an exchangeable head drill support body.

The above object is achieved by methods and devices according to the independent claims. Preferred embodiments are defined in dependent claims.

In general words, a drill tip screw for fastening of a drill tip to an exchangeable head drill support body is presented, wherein the drill tip screw has a general extension in an axial direction. The drill tip screw comprises a screw head at a first axial end of the drill tip screw and an outer threading at a second axial end of the drill tip screw. The second axial end is opposite to the first axial end. The drill tip screw further comprises a center portion, wherein the center portion is rotationally symmetric. The drill tip screw further comprises a first tapered portion having its widest end connected in one piece to the center portion. The first tapered portion is rotationally symmetric. An axial cross-section of the first tapered portion presents a concave surface shape.

The center portion forms a contact with an inner surface of a hole of the drill tip, at which forces are applied to the drill tip screw. The ends of drill tip screw are furthermore in contact with inner surfaces of holes/threadings of an exchangeable head drill support body, at which contacts also applies forces to the drill tip screw. These forces typically cause high stress close to the ends of the drill tip screw and are at least part responsible for any damage to the drill tip screw. It has, however, been found that the concave shape provided closest to the center portion, as defined in the present invention, causes a spreading of the stresses along the length of the drill tip screw, thereby reducing the maximum stress of the drill tip screw.

In a preferred embodiment, a tapered portion is provided also at the other side of the center portion. Thus, the first tapered portion, having its widest end connected in one piece to the center portion extends towards the screw head. A second tapered portion has its widest end connected in one piece to the center portion and extends towards the outer threading. The second tapered portion is rotationally symmetric. An axial cross-section of the second tapered portion presents a concave surface shape.

One advantage with the proposed technology is that the reduced stresses of the drill tip screw reduce the risks for breaking the drill tip screw. Other advantages will be appreciated when reading the detailed description.

### BRIEF DESCRIPTION OF THE DRAWINGS

The invention, together with further objects and advantages thereof, may best be understood by making reference to the following description taken together with the accompanying drawings, in which:
FIG. 1 is a schematic drawing of an embodiment of an exchangeable head drill tool;
FIG. 2 is an enlarged part of the front end of the exchangeable head drill tool of Fig. 1;
FIG. 3 is a schematic drawing of an embodiment of a drill tip screw;
FIG. 4 is a cross-sectional view of an embodiment of a drill tip screw inserted in an exchangeable head drill support body for holding a drill tip;
FIG. 5 is an enlarged schematic drawing of an embodiment of a screw head of a drill tip screw; and
FIG. 6 is a schematic view of how a drill tip is mounted.

### DETAILED DESCRIPTION

Throughout the drawings, the same reference numbers are used for similar or corresponding elements.

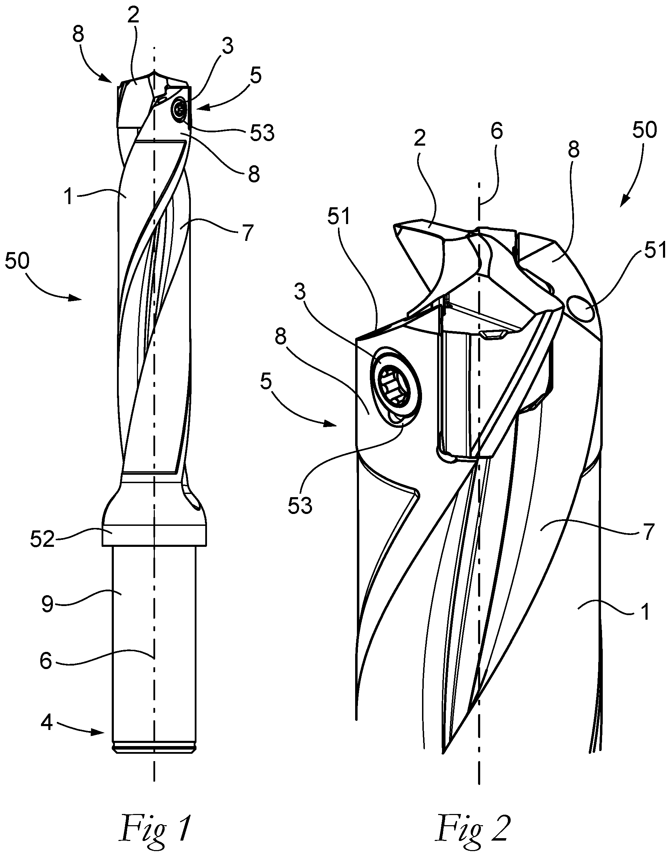

For a better understanding of the proposed technology, it may be useful to begin with a brief overview of a typical exchangeable head drill tool. Figure 1 illustrates schematically an embodiment of an exchangeable head drill tool 50. The exchangeable head drill tool 50 is generally extended along a longitudinal axis 6 between a rear end 4 and a front end 5. The exchangeable head drill tool 50 comprises an exchangeable head drill support body 1 to which a drill tip 2 is fastened by means of a drill tip screw 3 at the front end 5. The drill tip 2 is inserted into a jaw space between two towers 8 protruding forwardly from the exchangeable head drill support body 1. The drill tip screw 3 is inserted through a hole 53 in one of the towers 8, through a hole in the drill tip 2 and is fastened by a threading in a hole 53 of the other one of the towers 8. This arrangement firmly secures the drill tip 2 to the exchangeable head drill support body 1.

The exchangeable head drill support body 1 of this embodiment is further designed to support the drill tip 2 in its cutting action. To this end, the exchangeable head drill support body 1 presents a chip flute 7 in which cutoff material can be transported away from the cutting region during operation. The exchangeable head drill support body 1 is furthermore designed to be inserted into a cutting machine by means of a generally cylindrical coupling hank 9 and a correct mounting may be assured by a height depth stop collar 52. Figure 1 illustrates one typical embodiment, but the present ideas are not restricted only to that embodiment. The present ideas are applicable to most exchangeable head drill tools 50 based on the mounting of a drill tip 2 between towers 8 of an exchangeable head drill support body 1 by means of a drill tip screw 3.

Figure 2 illustrates the front end 5 in an enlarged view. Additional functionalities such as cooling of the cutting region may be provided e.g. by cooling channels 51 in the towers 8.

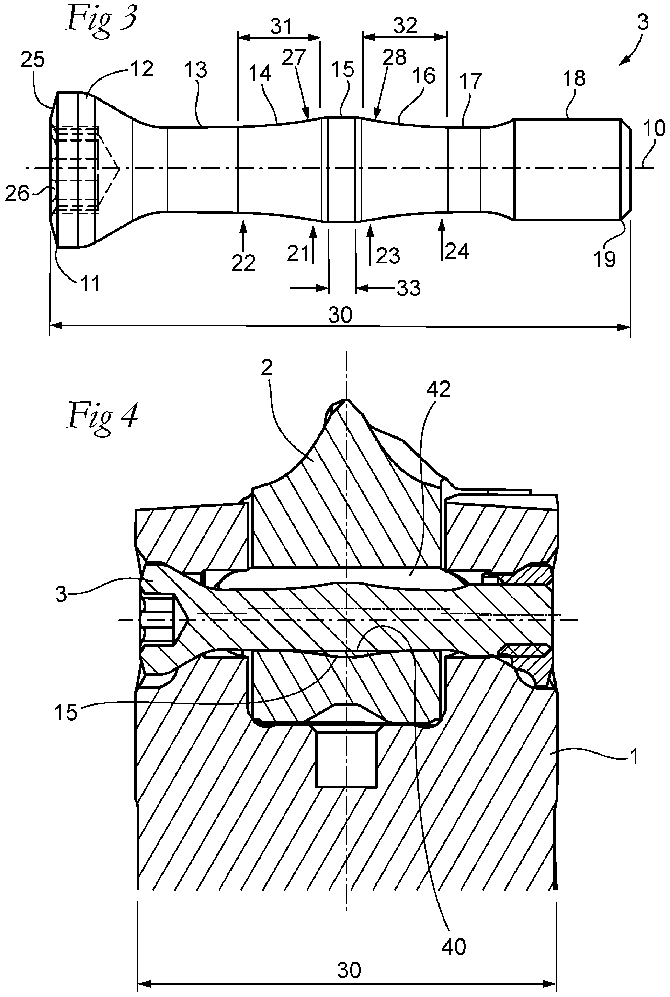

Figure 3 is a drawing of an embodiment of a drill tip screw 3 for fastening of a drill tip to an exchangeable head drill support body. The drill tip screw 3 has a general extension in an axial direction 10. The drill tip screw 3 comprises a screw head 12 at a first axial end 11 of the drill tip screw 3. An outer threading 18 is provided at a second axial end 19 of the drill tip screw 3. The second axial end 19 is opposite to the first axial end 11. The details of the outer threading 18 are not illustrated in order to make the illustration easier to comprehend. The screw head 12 is intended to be engaged with a tool at an end surface 25 of the screw head 12 by screw head grip recesses 26 for applying a torque thereon when the drill tip screw 3 is to be fastened. The outer threading 18 is intended to interact with an inner threading of the exchangeable head drill support body.

The drill tip screw 3 further comprises a center portion 15. The center portion 15 is rotationally symmetric. The center portion 15 is intended to be in contact with an inner surface of a hole through the drill tip. A pre-stress is created in the drill tip screw 3 by the forces acting at the center portion 15 and the first and second axial ends 11, 19.

The drill tip screw 3 further comprises a first tapered portion 14. The first tapered portion 14 is rotationally symmetric. The first tapered portion 14 has its widest end 21 connected in one piece to the center portion 15. An axial cross-section of the first tapered portion 14 presents a concave surface shape.

When moving along the first tapered portion 14 from the center portion 15 and outwards, the diameter of the first tapered portion 14 decreases. Due to this shape, the decrease is fastest close to the center portion 15. Since the dimension of the screw material decreases, the stress is increased in this area compared to prior-art screws. However, since the maximum stress region of the drill tip screws 3 typically occur closer to the ends of the drill tip screw 3, a weakening of parts closer to the center portion 15 will take up a part of the stress from the maximum stress region, leading to a more evenly distributed stress. A lower maximum stress level may thereby be achieved. In other words, instead of, as might be a first thought, increasing the dimensions for improving the strength of the drill tip screw 3, surprisingly, the dimensions are instead reduced. However, since the reduced dimensions contribute to the redistribution of stresses over the drill tip screw 3, the maximum stress can instead be reduced, which increases the possibilities for the drill tip screw 3 to withstand the operation forces without breaking.

The first tapered portion can be provided on either side of the center portion 15.

In the embodiment illustrated in Figure 1, further improvements are provided, where tapering is provided on both sides of the center portion 15. In this particular embodiment, the first tapered portion 14, having its widest end 21 connected in one piece to the center portion 15, extends towards the screw head 12. Furthermore, the drill tip screw 3 comprises a second tapered portion 16. The second tapered portion 16 is rotationally symmetric. The second tapered portion 16 has its widest end 23 connected in one piece to the center portion 15 and extends towards the outer threading 18. Analogue to the first tapered portion 14 also here, an axial cross-section of the second tapered portion presents a concave surface shape. This enables a further distribution of the stresses over the drill tip screw 3.

By these measures, and furthermore by preferred embodiments discussed further below, the shape of the screw stem is designed for a larger elastic deflection with substantially lowered maximum stress in the screw stem. Also with the new shape of the drill tip screw, there is more gap provided for improving unwanted contact with the drill tip or exchangeable head drill support body. The drill tip screw is intended to be seated in the holes of the two towers together with a nut or a thread in one of the tower holes. The drill tip screw is also in contact with a force holding the drill tip inside the hole, holding the drill tip in the axial direction. The drill tip screw is, when installed, pre-stressed by that the screw head is located offset in the countersunk recess in the towers which causes the screw to bend and push with its central part against the screw hole surface of the drill tip. The drill tip screw is holding the two towers in the tip seat together and centers the drill tip. The towers will bend in somewhat to lock the drill tip.

In a preferred embodiment, at least a part of the concave surface shape of the first tapered portion 14 has a constant radius of curvature 27. The constant radius of curvature is a suitable shape for achieving both a fast reduction of diameter in the direction of the screw head 12 and avoiding structures that are sensitive to stress.

Analogously, in a preferred embodiment, at least a part of the concave surface shape of the second tapered portion 16 has a constant radius of curvature 28.

The reduction of the radius of the tapered portions 14, 16 between their widest ends 21, 23 and narrowest ends 22, 24 also influences the distribution of stresses. In a preferred embodiment, a radius ratio between a narrowest end 22 and the widest end 21 of the first tapered portion 14 is within the range of 0.70 - 0.92, and more preferably in the range of 0.75 - 0.87. For instance, for a drill tip screw having an outer threading in the size of M3, designs having a widest end diameter of 3.1 mm and a narrowest end diameter of 2.5 mm have been used in tests, with excellent results.

Similarly, in a preferred embodiment, a radius ratio between a narrowest end 24 and the widest end 23 of the second tapered portion 16 is within the range of 0.70 - 0.92, and more preferably in the range of 0.75 - 0.87.

The length of the tapered sections does also influence the distribution of stresses. In a preferred embodiment, a length 31, in the axial direction 10, of the first tapered portion 14 is within the range of 7-25% compared the length 30 of the entire drill tip screw 3, and more preferably within 12-18%. For instance, test drill tip screws, with good performance, have been made with a total length of 17.15 mm and 19.15 mm respectively, where the length of the tapered portions have been between 2.5 mm and 4.5 mm.

Likewise, in a preferred embodiment, a length 32, in the axial direction 10, of the second tapered portion 16 is within the range of 4-25% compared the length 30 of the entire drill tip screw 3, and more preferably within 5-13%.

The concave shape of the tapered section(s) 14, 16 ensures a relatively fast radius reduction when going away from the center portion 15. However, when approaching the screw head 12 or the outer threading 18, the rate of the radius reduction is small and the benefit of having a concave shape becomes limited. Simpler shapes portions of the drill tip screw can therefore be used in these regions. Therefore, in one embodiment the drill tip screw further comprises a first frustum of a cone 13. The first frustum of a cone 13 is rotationally symmetric. The first frustum of a cone 13 is connected in one piece to a narrowest end 22 of the first tapered portion 14. The radius of the first frustum of a cone 13 decreases in the direction towards the screw head 12.

A similar frustum of a cone may instead be connected in one piece to a narrowest end of the second tapered portion.

In a preferred embodiment, frustums of cones are provided at both sides of the center portion 15. In other words, the first frustum of a cone 13 is connected in one piece to a narrowest end 22 of the first tapered portion 14 and extends tapered towards the screw head 12. The drill tip screw 3 further comprises a second frustum of a cone 17. The second frustum of a cone 17 is rotationally symmetric. The second frustum of a cone 17 is connected in one piece to a narrowest end 24 of the second tapered portion 16 and extends tapered towards the outer threading 18.

The center portion 15 is a part intended to be in contact with an inner surface defining a hole in the drill tip. In order to ensure a well-defined contact geometry, a line contact is in general to prefer. A point contact, as e.g. achieved by a convex screw portion, may move in axial direction depending on many factors of the mounting, e.g. the exact positioning of the threading of the exchangeable head drill support body. Furthermore, as the drill tip screw 3 and the drill tip are worn during operation, the exact location of the point contact may change. A line contact is therefore to prefer. In a preferred embodiment, the center portion 15 comprises a circular cylinder.

However, the line contact should not be too long either, since it is situated at the thickest part of the drill tip screw, when screw head and outer threading is disregarded. An increased length of the line contact will tend to concentrate the stress at the parts closest to the screw head and outer threading.

Figure 4 is a cross-section view of a drill tip screw 3 in an exchangeable head drill support body 1 fixating a drill tip 2. The illustration is made without any of the deformations that in reality are induced during mounting. The different parts therefore seem to partly overlap, where they in reality instead are deformed. The center portion 15 is mounted in pre-stressed contact with an inner surface 40 defining a hole 42 in the drill tip 2. This is indicated in the figure in that the surface of the center portion 15 is drawn below the surface of the hole in the drill tip 2. A length 33 (Fig. 3) of the center portion 15 is preferably selected in relation to a total length 30 of the entire drill tip screw 30. The threaded end of the drill tip screw 3 is also in reality in engagement with the inner threading of the hole in the exchangeable head drill support body 1 or a threading insert inserted therein. This also induce the pre-stress of the drill tip screw 3.

In a preferred embodiment, the length 33 of the center portion 15 in the axial direction is in the range of 1 - 15% of the length 30 in the axial direction 10 of the entire drill tip screw 3, and more preferably within 3 - 7%. For a drill tip screw with a total length of 19.15 mm, the center portion 15 is thus preferably between 0.19 mm and 2.87 mm long, more preferably between 0.6 mm and 1.5 mm.

The dimensions of a drill tip screw are typically small. The holes in the towers of the exchangeable head drill support body are preferably kept narrow in order not to compromise the strength of the towers. The outside of the towers have typically a shape of a part of a cylinder having a diameter that is essentially equal to the width of the drill tip. The hole in which the drill tip screw is intended to be entered will therefore have an edge that is non-flat. When mounting the drill tip screw, the screw head must therefore be inside of the hole edge at all places. At the same time, it is advantageous to have an as thick screw head as possible for strength reasons.

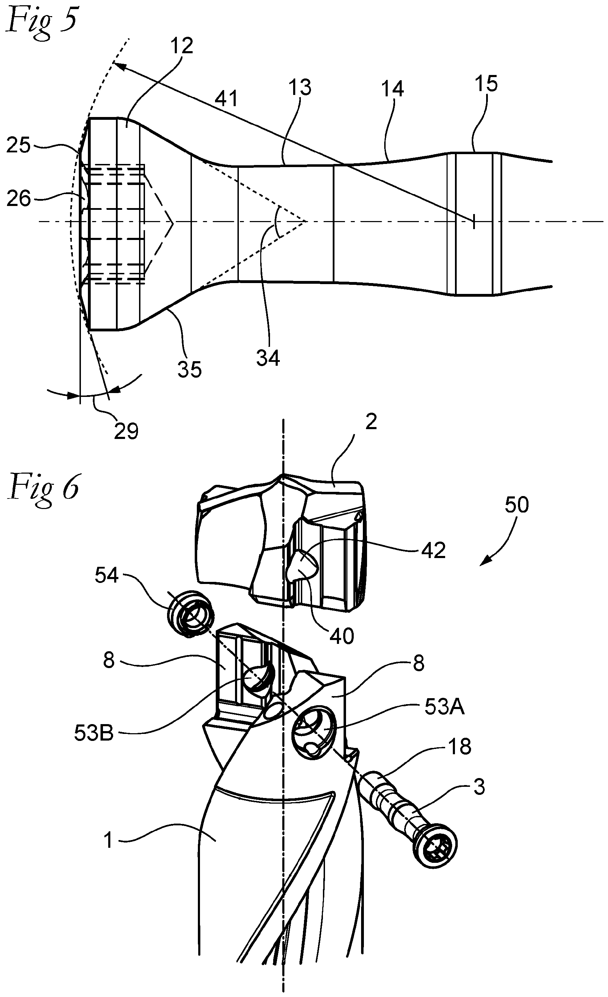

Figure 5 illustrates schematically a close-up of the screw head 12. By cutting the edges of the screw head 12 somewhat, the edges of the screw head 12 may be provided inside an outer envelope 41 of the towers, as indicated by the dotted line and arrow, while keeping a thicker goods of material around the gripping recess 26 of the screw head 12. The ideal shape would be to give the end surface of the screw head a spherical envelope having the same radius as the towers. However, any cutting of the edges of the screw head 12 will give some contribution.

In a preferred embodiment, at least a major part of an end surface 25, excluding grip recesses 26, if any, of the screw head 12 is tapered radially outwards with an angle 29 between 10 and 20 degrees and preferably around 15 degrees.

Screws being exposed for varying forces in both axial and radial direction, will sometimes have a tendency to loosen successively. However, by giving the inner part of the screw head 12 a shape according to a frustum of a cone 35, such tendencies may be reduced. An opening angle 34 of the cone being in the range of 45 - 90 degrees has been found to be preferred and in particularly preferred in the range of 55 - 65 degrees.

In other words, in one embodiment, the screw head 12 comprises a part having the shape of a frustum of a cone 35 along the axial direction 10. The outer surface of the part having the shape of a frustum of a cone 35 has a cone opening angle 34 within the range of 45 - 90 degrees, and more preferably of in the range of 55 - 65 degrees.

In calculations of different embodiments of drill tip screws according to the above presented ideas, it was found that the maximum stress level of a drill tip screw could be reduced by up to 40%, including torsional, tensile and bending stress.

Figure 6 illustrates schematically the mounting of the drill tip 2. The drill tip is inserted in the jaw between the two towers 8 and the drill tip screw 3 is inserted through the hole 53A of one of the towers and into the hole 42 of the drill tip 2. Thereby the inner surface 40 of the hole 42 in the drill tip 2 comes into contact with the drill tip screw 3 and due to the deliberate misalignment, a force will act between the inner surface 40 and the center portion 15 of the drill tip screw 3, keeping the drill tip 2 in place. The outer threading 18 of the drill tip screw 3 is engaged into an inner threading 54 either of a threading insert to be inserted into the hole 53B or as provided directly in the surfaces of hole 53B. The screw force will also clamp the drill tip 2 between the two towers 8 in order to achieve a rigid connection.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A drill tip screw (3) for fastening of a drill tip (2) to an exchangeable head drill support body (1), wherein the drill tip screw (3) has a general extension in an axial direction (10), said drill tip screw (3) comprising:
a screw head (12) at a first axial end (11) of the drill tip screw (3);
an outer threading (18) at a second axial end (19) of the drill tip screw (3), opposite to the first axial end (11);
a, rotationally symmetric, center portion (15);
a first, rotationally symmetric, tapered portion (14), having its widest end (21) connected in one piece to the center portion (15);
wherein an axial cross-section of the first tapered portion (14) presents a concave surface shape.

2. The drill tip screw according to claim 1, **characterized in that** at least a part of the concave surface shape of the first tapered portion (14) has a constant radius of curvature (27).

3. The drill tip screw according to claim 1 or 2, **characterized in that** a radius ratio between a narrowest end (22) and the widest end (21) of the first tapered portion (14) is within the range of 0.70 - 0.92, preferably in the range of 0.75 - 0.87.

4. The drill tip screw according to any of the claims 1 to 3, **characterized in that** a length (31), in the axial direction (10), of the first tapered portion (14) is within the range of 7-25% compared the length (30) of the entire drill tip screw (3), preferably within 12-18%.

5. The drill tip screw according to any of the claims 1 to 4, **characterized in that** the drill tip screw (3) further comprises a first, rotationally symmetric, frustum of a cone (13) connected in one piece to a narrowest end (22) of the first tapered portion (14).

6. The drill tip screw according to any of the claims 1 to 5, **characterized in that** the first tapered portion (14), having its widest end (21) connected in one piece to the center portion (15) extends towards the screw head (12); and by further comprising:
a second, rotationally symmetric, tapered portion (16), having its widest end (23) connected in one piece to the center portion (15) and extending towards the outer threading (18);
wherein an axial cross-section of the second tapered portion (16) presents a concave surface shape.

7. The drill tip screw according to claim 6, **characterized in that** at least a part of the concave surface shape of the second tapered portion (16) has a constant radius of curvature (28).

8. The drill tip screw according to claim 6 or 7, **characterized in that** a radius ratio between a narrowest end (24) and the widest end (23) of the second tapered portion (16) is within the range of 0.70 - 0.92, preferably in the range of 0.75 - 0.87.

9. The drill tip screw according to any of the claims 6 to 8, **characterized in that** a length (32), in the axial direction (10), of the second tapered portion (16) is within the range of 4-25% compared the length (30) of the entire drill tip screw (3), preferably within 5-13%.

10. The drill tip screw according to any of the claims 6 to 9, **characterized in that** the drill tip screw (3) further comprises a first, rotationally symmetric, frustum of a cone (13, 17) connected in one piece to a narrowest end (22, 24) of the first tapered portion (14) or the second tapered portion (16).

11. The drill tip screw according to claim 10, **characterized in that** the first frustum of a cone (13) connected in one piece to a narrowest end (22) of the first tapered portion (14) extends tapered towards the screw head (12); and by further comprising:
a second, rotationally symmetric, frustum of a cone (17) connected in one piece to a narrowest end (24) of the second tapered portion (16) and extending tapered towards the outer threading (18).

12. The drill tip screw according to any of the claims 1 to 11, **characterized in that** the center portion (15) comprises a circular cylinder.

13. The drill tip screw according to any of the claims 1 to 12, **characterized in that** the length (33) of the center portion (15) in the axial direction (10) is in the range of 1 - 15% of the length (30) in the axial direction (10) of the entire drill tip screw (3), preferably within 3 - 7%.

14. The drill tip screw according to any of the claims 1 to 13, **characterized in that** at least a major part of an end surface (43), excluding grip recesses (42), if any, of the screw head (12) is tapered radially outwards with an angle between 10 and 20 degrees.

15. The drill tip screw according to any of the claims 1 to 14, **characterized in that** the screw head (12) comprises a part having the shape of a frustum of a cone (35) along the axial direction (10), wherein the outer surface of the part having the shape of a frustum of a cone has a cone opening angle (34) within the range of 45 to 90 degrees, and more preferably within the range of 55 to 65 degrees.
